# EUROPÄISCHE PATENTANMELDUNG

(11) **EP 1 537 803 A1**
(43) Veröffentlichungstag der Anmeldung: **08.06.2005**
(21) Anmeldenummer: 03027974.9
(22) Anmeldetag: 05.12.2003
(51) Int. Cl.: A47B 9/10, F16F 9/02

(54) **Einrichtung mit einem höhenverstellbaren Bauteil**

(71) Anmelder: Stabilus GmbH, D-56070 Koblenz (DE)
(72) Erfinder: Müller, Thomas, Dipl.-Ing. (FH), 56244 Leuterod (DE)
(74) Vertreter: Klein, Thomas, Dipl.-Ing.

(57) **Zusammenfassung**

Die Erfindung bezieht sich auf eine Einrichtung mit einem höhenverstellbaren Bauteil. Eine etwa senkrecht sich erstreckende, das Bauteil tragende Standsäule, ist als Gasfeder ausgebildet. Die Gasfeder weist einen Zylinder 1 auf, der an seinem unteren Ende mit einem feststehenden Teil der Einrichtung verbunden ist und in dem ein Kolben 4 verschiebbar angeordnet ist, der den Zylinder 1 in eine untere und eine obere Zylinderkammer 8, 9 unterteilt sowie einseitig eine Kolbenstange 5 aufweist. Die Kolbenstange 5 durchragt die obere Zylinderkammer 8 und ist aus dem oberen Ende des Zylinders 1 herausgeführt sowie trägt an ihrem freien Ende 7 das Bauteil. Die obere und untere Zylinderkammer 8 und 9 sind mit einer unter Überdruck stehenden Gasfüllung gefüllt, durch die der Kolben 4 mit einer nach oben gerichteten Ausschubkraft beaufschlagt ist, die etwa der entgegengerichteten Gewichtskraft des Bauteils entspricht. Ein Ventil ermöglicht einen Gasstrom von der oberen in die untere Zylinderkammer 8, 9 und sperrt in der entgegengesetzten Strömungsrichtung. Durch ein manuell betätigbares Verbindungsventil ist die untere und die obere Kammer miteinander verbindbar.

## Beschreibung

Die Erfindung bezieht sich auf eine Einrichtung, insbesondere einen Tisch mit einem höhenverstellbaren Bauteil, insbesondere einer Tischplatte, mit einer etwa senkrecht sich erstreckenden, das Bauteil tragenden Standsäule, die als Gasfeder ausgebildet ist.

Derartige Einrichtungen können Tische sein, deren Tischplatte höhenverstellbar ist. Werden solche Tische an einem Krankenbett verwendet und ragen mit ihrer Tischplatte über das Krankenbett, so kann bei einem Anheben des Bettes dieses zur Anlage an der Unterseite der Tischplatte gelangen und bei weiterem Anheben des Bettes den Tisch mit seinem Fußteil vom Boden abheben. Dies führt leicht zu einem Umkippen des Tischs.

Aufgabe der Erfindung ist es eine Einrichtung der eingangs genannten Art zu schaffen, die bei einer Kraftbeaufschlagung des höhenverstellbaren Bauteils in Erhöhungsrichtung eine leichtgängige Verstellung des Bauteils in eine höhere Position ermöglicht.

Diese Aufgabe wird erfindungsgemäß dadurch gelöst, daß die Gasfeder einen Zylinder aufweist, der an seinem unteren Ende mit einem feststehenden Teil der Einrichtung verbunden ist und in dem ein Kolben verschiebbar angeordnet ist, der den Zylinder in eine untere und eine obere Zylinderkammer unterteilt sowie einseitig eine Kolbenstange aufweist, die die obere Zylinderkammer durchragt und aus dem oberen Ende des Zylinders herausgeführt ist sowie an ihrem freien Ende das Bauteil trägt, mit einer unter Überdruck stehenden Gasfüllung der oberen und der unteren Zylinderkammer, durch die der Kolben mit einer nach oben gerichteten Ausschubkraft beaufschlagt ist, die etwa der entgegengerichteten Gewichtskraft des Bauteils entspricht, mit einem Ventil, das einen Gasstrom von der oberen in die untere Zylinderkammer ermöglicht und in der entgegengesetzten Strömungsrichtung sperrt sowie mit einem manuell betätigbaren Verbindungsventil, durch das die untere und obere Kammer miteinander verbindbar sind.

Durch die größere Wirkfläche des Kolbens auf der der unteren Zylinderkammer zugewandten Seite gegenüber der um den Querschnitt der Kolbenstange verringerten Wirkfläche auf der der oberen Zylinderkammer zugewandten Seite und den Überdruck der Gasfüllung wird eine nach oben gerichtete Ausschubkraft auf den Kolben ausgeübt. Dieser Ausschubkraft steht die Gewichtskraft etwa gleicher Größe des höhenverstellbaren Bauteils entgegen, so daß das mit Ausnahme seiner Gewichtskraft unbelastete Bauteil in einem Schwebezustand ist.

Wird das Bauteil zusätzlich in Einschubrichtung der Gasfeder belastet, so wird ein Gasstrom von der unteren in die obere Zylinderkammer durch das Ventil abgesperrt und das Bauteil in seiner Position gehalten.

Erfolgt aber eine Belastung in Ausschubrichtung der Gasfeder, so kann das Gas von der oberen in die untere Zylinderkammer strömen und das Bauteil leicht in eine höhere Position verstellt werden. Ist dabei der Querschnitt des Ventils groß, so wird auch weitgehend ein Widerstand durch eine Drosselwirkung des Ventils vermieden.

Dies ermöglicht ein leichtgängiges Anheben des Bauteils mit nur geringer erforderlicher Anhubkraft. Dabei kann stufenlos eine neue Höhenposition eingestellt werden.
In einfacher Ausbildung mit wenigen Bauteilen kann an der radial umlaufenden Mantelfläche des Kolbens eine mit der unteren Zylinderkammer verbundene, radial umlaufende Nut ausgebildet sein, in der ein gummielastischer Dichtring geringerer axialer Erstreckung als der Nut axial bewegbar angeordnet ist, durch den eine Verbindung der Nut mit der oberen Zylinderkammer absperrbar ist.

Entspricht der Außendurchmesser des Dichtrings etwa dem Innendurchmesser des Zylinders, so kann er zusätzlich auch noch zu einer Abdichtung des Kolbens gegenüber der Innenwand des Zylinders dienen.

Zu einem einfachen Aufbau führt es dabei, wenn die Verbindung der Nut mit der oberen Zylinderkammer ein Ringspalt zwischen der radial umlaufenden Mantelfläche des Kolbens und der Innenwand des Zylinders auf der der oberen Zylinderkammer zugewanden Seite der Nut ist.

Ist die der oberen Zylinderkammer zugewandte Seitewand der Nut ganz oder teilweise zur oberen Zylinderkammer hin geneigt, so erhält der Dichtring bei einer Einschubbewegung der Gasfeder nicht nur eine axiale Beaufschlagung durch den Gasdruck der unteren Zylinderkammer sondern auch noch eine radial nach außen gerichtete Beaufschlagung, so daß eine hohe Schließsicherheit des Ventils gegeben ist. Damit wird auch bei höherer Belastung des Bauteil in Einschubrichtung ein Verbleiben in der eingenommenen Position sichergestellt.

Um ein ungehindertes Durchströmen des geöffneten Ventils und damit ein leichtgängiges Bewegen des Bauteils in Anhubrichtung zu gewährleisten, kann zwischen dem Boden der Nut und der radial umlaufenden Innenfläche des Dichtrings ein mit der unteren Zylinderkammer verbundener Ringraum gebildet sein.

Dazu kann die Nut über einen oder mehrere Verbindungskanäle mit der unteren Zylinderkammer verbunden sein.

Zum manuell betätigbaren Absenken des höhenverstellbaren Bauteils kann ein einfacher Weise das Verbindungsventil in dem Kolben angeordnet und von einem durch eine Koaxialbohrung in der Kolbenstange zum freien Ende der Kolbenstange verschiebbar geführten und manuell verschiebbar beaufschlagbaren Ventilstößel öffenbar sein.

Durch manuelles Verschieben des Ventilstößels wird dabei das Verbindungsventil geöffnet, so daß bei geringer Kraftbeaufschlagung des Bauteils in Einschubrichtung Gas von der unteren in die obere Zylinderkammer strömen und der Kolben sich absenken kann.

Besitzt das Verbindungsventil ein in Schließrichtung vom Druck der unteren Zylinderkammer beaufschlagbares Schließglied, so führt eine Belastung des höhenverstellbaren Bauteils in Einschubrichtung zu einer Erhöhung der Schließkraft des Verbindungsventils und damit zu einer erhöhten Sicherheit des Verbleibens des Bauteils in seiner eingenommenen Position.

Das obere Ende des Zylinders kann durch eine Dichtungs-Führungseinheit verschlossen sein, durch die die Kolbenstange verschiebbar dicht hindurchgeführt ist.

Das untere Ende des Zylinders ist vorzugsweise durch einen Boden verschlossen. Ist die Einrichtung ein Tisch und das höhenverstellbare Bauteil eine Tischplatte, so kann das untere Ende des Zylinders mit einem Fußteil verbunden sein.

Ein Ausführungsbeispiel der Erfindung ist in der Zeichnung dargestellt und wird im folgenden näher beschrieben. Es zeigen
- Figur 1: einen Querschnitt durch eine Gasfeder
- Figur 2: einen vergrößerten Ausschnitt "x" der Gasfeder nach Figur 1 im Bereich des Kolbens mit geschlossenem Ventil
- Figur 3: den Ausschnitt "x" nach Figur 2 mit geöffnetem Ventil.

Die in den Figuren dargestellte Gasfeder ist eine Standsäule eines Tischs. Sie besitzt einen Zylinder 1, dessen unteres Ende durch einen Boden 2 verschlossen ist und ein Befestigungselement 3 zum Befestigen eines nicht dargestellten Fußteils des Tischs aufweist.

In dem Zylinder 1 ist ein Kolben 4 verschiebbar angeordnet, der einseitig mit einer Kolbenstange 5 versehen ist, die mit ihrem oberen Ende durch eine das obere Ende des Zylinders 1 verschließende Dichtungs- Führungseinheit 6 dicht hindurch nach außen geführt ist.

An dem oberen Ende 7 der Kolbenstange 5 ist eine nicht dargestellte Tischplatte des Tischs befestigbar. Durch den Kolben 4 wird der Innenraum des Zylinders 1 in eine obere Zylinderkammer 8 und eine untere Zylinderkammer 9 unterteilt, die beide mit einem unter Überdruck stehenden Gas gefüllt sind. Da die Wirkfläche des Kolbens 4 um die Querschnittsfläche der Kolbenstange 5 auf der der oberen Zylinderkammer 8 zugewandten Seite geringer ist als auf der der unteren Zylinderkammer 9 zugewandten Seite, wirkt durch den Gasdruck eine nach oben gerichtete Ausschubkraft auf den Kolben 4.

Dieser nach oben gerichteten Ausschubkraft wirkt eine Gewichtskraft des Gewichts der Tischplatte nach unten entgegen, die etwa der Ausschubkraft entspricht, so daß sich der Kolben 4 und damit auch die unbelastete Tischplatte in einer Schwebelage befinden.

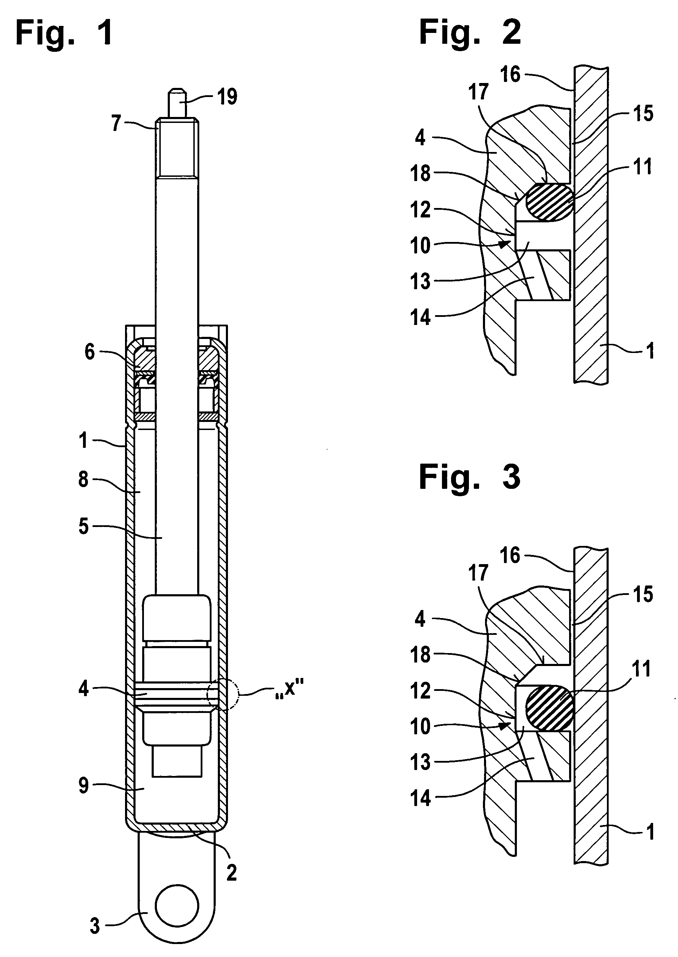

Wie in dem in den Figuren 2 und 3 dargestellten Ausschnitt "x" aus Figur 1 dargestellt ist, ist an der radial umlaufenden Mantelfläche des Kolbens 4 eine radial umlaufende Nut 10 ausgebildet, in der ein gummielastischer Dichtring 11 geringerer axialer Erstreckung als der axialen Erstreckung der Nut 10 axial bewegbar angeordnet ist.

Der Außendurchmesser des Dichtrings 11 entspricht etwa dem Innendurchmesser des . Zylinders 1.

Zwischen dem Boden 12 der Nut 10 und der radial umlaufenden Innenfläche des Dichtrings 11 ist ein Ringraum 13 gebildet, der über im Kolben 4 ausgebildete Verbindungskanäle 14 mit der unteren Zylinderkammer 9 verbunden ist.

Eine Verbindung der Nut 10 mit der oberen Zylinderkammer 8 ist durch einen Ringspalt 15 zwischen der radial umlaufenden Mantelfläche des Kolbens 4 und der Innenwand 16 des Zylinders 1 auf der der oberen Zylinderkammer 8 zugewandten Seite der Nut 10 gebildet.
Die der oberen Zylinderkammer 8 zugewandte Seitenwand 17 ist in ihrem dem Boden 12 zugewandten Bereich 18 zur oberen Zylinderkammer 8 hin geneigt.

Ist die Kolbenstange 5 nur mit der Gewichtskraft der Tischplatte belastet, befindet sich das in den Figuren 2 und 3 dargestellte Ventil in der in Figur 3 dargestellten Position.

Dabei ist der Ringraum 13 nicht nur über die Verbindungskanäle 14 mit der unteren Zylinderkammer 9 sondern über den Ringspalt 15 auch mit der oberen Zylinderkammer 8 verbunden, so daß auch beide Zylinderkammern 8 und 9 miteinander in Verbindung stehen. Dabei befinden sich der Kolben 4 und die Tischplatte in einem Schwebezustand. Wird nun die Tischplatte und damit auch der Kolben 4 mit einer Kraft nach oben belastet, die sehr gering sein kann, so werden Tischplatte und Kolben 4 leichtgängig nach oben bewegt, da Gas aus der oberen Zylinderkammer 8 frei durch den Ringspalt 15, den Ringraum 13 und die Verbindungskanäle 14 in die untere Zylinderkammer 9 strömen kann.

Damit ist ein leichtes Anheben der Tischplatte möglich. Dies ist besonders von Vorteil, wenn der Tisch an einem Krankenbett verwendet wird und die Tischplatte über das Krankenbett ragt. Wird das Krankenbett angehoben und schlägt von unten an die Tischplatte an, so bewegt sich diese ohne nennenswerten Widerstand mit nach oben. Der Tisch wird nicht umgeworfen und auf der Tischplatte befindliche Gegenstände verbleiben in ihrer Position.

Befinden sich derartige Gegenstände auf der Tischplatte, so üben sie mit ihrem Gewicht eine Gegenkraft zu der nach oben gerichteten Ausschubkraft der unteren Zylinderkammer 9 aus. Durch diese Gewichtskraft wird eine Verschiebebewegung von Tischplatte und Kolben 4 eingeleitet, wobei Gas von der unteren Zylinderkammer 9 in die obere Zylinderkammer 8 strömen möchte. Durch die Bewegungseinleitung des Kolbens 4 und dem Strömungsbeginn des Gases wird der Dichtring 11 sofort aus seiner in Figur 3 dargestellten Position in die in Figur 2 dargestellte Position bewegt und verschließt den Ringspalt 15, so daß kein Überströmen von Gas von der unteren in die obere Zylinderkammer 9 und 8 sowie ein Absenken des Kolbens 4 und der Tischplatte erfolgen kann. Dieser Vorgang erfolgt derart rasch, daß eine Absenkung der Tischplatte praktisch nicht feststellbar ist.

Der Dichtring 11 wird dabei durch den erhöhten Druck in der unteren Zylinderkammer 9 axial gegen die Seitenwand 17 und durch den geneigten Bereich 18 der Seitenwand 17 radial nach außen gegen die Innenwand 16 des Zylinders 1 gepreßt und elastisch verformt, so daß ein sicherer Verschluß des Ringsspalts 15 gewährleistet ist.

Soll nun bewußt die Tischplatte abgesenkt werden, so wird von außen manuell ein Ventilstößel 19 axial beaufschlagt, der durch eine Koaxialbohrung in der Kolbenstange 5 geführt ist und an deren oberem Ende 7 zur manuellen Beaufschlagung herausragt.

Mit seinem unteren Ende beaufschlagt dabei der Ventilstößel 19 ein nicht dargestelltes, im Kolben 4 angeordnetes Verbindungsventil, das dann seinen Ventildurchgang öffnet.

Dadurch kann Gas aus der unteren Zylinderkammer 9 in die obere Zylinderkammer 8 strömen und der Kolben 4 sowie die Tischplatte sich absenken.

Da das Schließglied des Verbindungsventils vom Druck der unteren Zylinderkammer 9 in Schließrichtung beaufschlagt ist, schließt das Verbindungsventil sobald der Ventilstößel 19 nicht mehr manuell betätigt ist.

### Bezugszeichenliste

- 1: Zylinder
- 2: Boden
- 3: Befestigungselement
- 4: Kolben
- 5: Kolbenstange
- 6: Dichtungs-Führungseinheit
- 7: oberes Ende
- 8: obere Zylinderkammer
- 9: untere Zylinderkammer
- 10: Nut
- 11: Dichtring
- 12: Boden
- 13: Ringraum
- 14: Verbindungskanäle
- 15: Ringspalt
- 16: Innenwand
- 17: Seitenwand
- 18: Bereich
- 19: Ventilstößel

## Patentansprüche

1. Einrichtung, insbesondere einen Tisch mit einem höhenverstellbaren Bauteil, insbesondere einer Tischplatte, mit einer etwa senkrecht sich erstreckenden, das Bauteil tragenden Standsäule, die als Gasfeder ausgebildet ist, **dadurch gekennzeichnet, daß** die Gasfeder einen Zylinder (1) aufweist, der an seinem unteren Ende mit einem feststehenden Teil der Einrichtung verbunden ist und in dem ein Kolben (4) verschiebbar angeordnet ist, der den Zylinder (1) in eine untere und eine obere Zylinderkammer (9, 8) unterteilt sowie einseitig eine Kolbenstange (5) aufweist, die die obere Zylinderkammer (8) durchragt und aus dem oberen Ende des Zylinders (1) herausgeführt ist sowie an ihrem freien Ende (7) das Bauteil trägt, mit einer unter Überdruck stehenden Gasfüllung der oberen und der unteren Zylinderkammer (8, 9), durch die der Kolben (4) mit einer nach oben gerichteten Ausschubkraft beaufschlagt ist, die etwa der entgegengerichteten Gewichtskraft des Bauteils entspricht, mit einem Ventil, das einen Gasstrom von der oberen in die untere Zylinderkammer (8, 9) ermöglicht und in der entgegengesetzten Strömungsrichtung sperrt sowie mit einem manuell betätigbaren Verbindungsventil, durch das die untere und obere Kammer (9, 8) miteinander verbindbar sind.

2. Einrichtung nach Anspruch 1, **dadurch gekennzeichnet, daß** an der radial umlaufenden Mantelfläche des Kolbens (4) eine mit der unteren Zylinderkammer (9) verbundene, radial umlaufende Nut (10) ausgebildet ist, in der ein gummielastischer Dichtring (11) geringerer axialer Erstreckung als der Nut (10) axial bewegbar angeordnet ist, durch den eine Verbindung der Nut (10) mit der oberen Zylinderkammer (8) absperrbar ist.

3. Einrichtung nach Anspruch 2, **dadurch gekennzeichnet, daß** der Außendurchmesser des Dichtrings (11) etwa dem Innendurchmesser des Zylinders (1) entspricht.

4. Einrichtung nach Anspruch 3, **dadurch gekennzeichnet, daß** die Verbindung der Nut (10) mit der oberen Zylinderkammer (8) ein Ringspalt (15) zwischen der radial umlaufenden Mantelfläche des Kolbens (4) und der Innenwand (16) des Zylinders (1) auf der der oberen Zylinderkammer (8) zugewanden Seite der Nut (10) ist.

5. Einrichtung nach Anspruch 4, **dadurch gekennzeichnet, daß** die der oberen Zylinderkammer (8) zugewande Seitenwand (17) der Nut (10) ganz oder teilweise zur oberen Zylinderkammer (8) hin geneigt ist.

6. Einrichtung nach einem der Ansprüche 1 bis 5, **dadurch gekennzeichnet, daß** zwischen dem Boden (12) der Nut (10) und der radial umlaufenden Innenfläche des Dichtrings (11) ein mit der unteren Zylinderkammer (9) verbundener Ringraum (13) gebildet ist.

7. Einrichtung nach einem der Ansprüche 2 bis 5, **dadurch gekennzeichnet, daß** die Nut (10) über einen oder mehrere Verbindungskanäle (14) mit der unteren Zylinderkammer (9) verbunden ist.

8. Einrichtung nach einem der vorhergehenden Ansprüche, **dadurch gekennzeichnet, daß** das Verbindungsventil in dem Kolben (4) angeordnet und von einem durch eine Koaxialbohrung in der Kolbenstange (5) zum freien Ende der Kolbenstange (5) verschiebbar geführten und manuell verschiebbar beaufschlagbaren Ventilstößel (19) öffenbar ist.

9. Einrichtung nach einem der vorhergehenden Ansprüche, **dadurch gekennzeichnet, daß** das Verbindungsventil ein in Schließrichtung vom Druck der unteren Zylinderkammer (9) beaufschlagbares Schließglied besitzt.

10. Einrichtung nach einem der vorhergehenden Ansprüche, **dadurch gekennzeichnet, daß** das obere Ende des Zylinders (1) durch eine Dichtungs-Führungseinheit (6) verschlossen ist, durch die die Kolbenstange (5) verschiebbar dicht hindurchgeführt ist.

11. Einrichtung nach einem der vorhergehenden Ansprüche, **dadurch gekennzeichnet, daß** das untere Ende des Zylinders (1) durch einen Boden (2) verschlossen ist.

12. Einrichtung nach einem der vorhergehenden Ansprüche, **dadurch gekennzeichnet, daß** das untere Ende des Zylinders (1) mit einem Fußteil verbunden ist.
